# EUROPÄISCHE PATENTSCHRIFT

(11) **EP 0 602 509 B1**
(45) Veröffentlichungstag und Bekanntmachung des Hinweises auf die Patenterteilung: **12.03.1997**
(21) Anmeldenummer: 93119715.6
(22) Anmeldetag: 07.12.1993
(51) Int. Cl.: C08F 4/62, C08F 10/00, C08F 2/14, C08F 2/00

(54) **Verfahren zur Herstellung von Polyolefinwachsen**
Process for the preparation of polyolefin waxes
Procédé de préparation de cires de polyoléfines

(30) Priorität: 15.12.1992 DE 4242203
(43) Veröffentlichungstag der Anmeldung: 22.06.1994
(73) Patentinhaber: HOECHST AKTIENGESELLSCHAFT, 65926 Frankfurt am Main (DE)
(72) Erfinder: Hess, Reiner, Dr., D-86368 Gersthofen (DE); Voigt, Hartmut, D-61462 Königstein/Taunus (DE); Herrmann, Hans-Friedrich, Dr., D-64291 Darmstadt (DE); Böhm, Ludwig, Dr., D-65795 Hattersheim/M. (DE)

(56) Entgegenhaltungen:
- EP-A- 0 161 060
- EP-A- 0 321 852
- DE-A- 1 520 609

## Beschreibung

Die vorliegende Erfindung bezieht sich auf ein Verfahren zur Herstellung von Polyolefinwachsen mit niedrigem Restaschegehalt.

Polyolefinwachse, insbesondere Polyethylenwachse, haben Bedeutung für eine Vielzahl von Anwendungsgebieten. Insbesondere hochkristalline Wachse finden steigendes Interesse, als Beimischung für abriebfeste Druckfarben, Lackmattierung und zur Herstellung von emulgierbaren Wachsen für Putzmittel.

Bekannt sind Verfahren zur Herstellung von Polyolefinwachsen bei Temperaturen oberhalb von 100°C in Lösung eines hochsiedenden Kohlenwasserstoffs (vgl. GB 1 311 013, US 3 951 935). Eine Suspensions-Polymerisation bei Temperaturen unterhalb des Wachsschmelzpunktes scheitert an der hohen Löslichkeit und/oder dem guten Quellvermögen dieser Produkte.

Es wurde festgestellt, daß Wachse in niedrigsiedenden Kohlenwasserstoffen, insbesondere Propan, nicht oder nur in verschwindendem Maße löslich sind und hierdurch auch für teilkristalline Wachse ein Suspensionsverfahren möglich ist (vgl. DE 42 17 378 und EP-A-0 571 882, nicht vorreröffentlicht). Dieses Suspensions-Polymerisationsverfahren ist durch die einfachere Abtrennung des Suspensionsmittels und die niedrigere Viskosität des Systems wirtschaftlich gegenüber dem Lösungsverfahren vorteilhaft.

Aus EP-A-321 852 sind 1-Olefinpolymerwachse mit sehr enger Molmassenverteilung, hoher Isotaktizität, enger Korngrößenverteilung und hoher Schüttdichte bekannt, die man mittels eines Katalysators in Gegenwart von geringen Mengen Wasserstoff bei der Polymerisation erhält. Der Katalysator besteht aus einer chiralen stereorigiden Metallocenverbindung und einem Aluminoxan.

Ein großes Problem bei der Suspensions-Polymerisation, insbesondere bei der Verwendung von löslichen Katalysatorsystemen ist der Aufbau von Wandbelägen welche die Mantelkühlung der Reaktoren behindert. Insbesondere dann, wenn durch den Bau größerer Reaktoren das Verhältnis von Reaktoroberfläche zu Reaktorvolumen ungünstiger wird, können durch eine Behinderung des Wärmeübergangs unkontrollierbare Erwärmungen des Polymerisationssystems auftreten.

Es bestand daher die Aufgabe, ein Polymerisation-Verfahren zu finden, in welchem Polyolefinwachse ohne die beschriebenen Nachteile mit Metallocen-Katalysatoren hergestellt werden können.

Es wurde gefunden, daß bei der Suspensionspolymerisation von Ethylen und anderen Olefinen in Propan mit Metallocen-Katalysatorsystemen eine Reaktorkühlung durch Kondensation des Dampfes ("Siedekühlung") durchgeführt werden kann, und daß hierdurch Reaktorbeläge vermieden werden.

Die Erfindung betrifft somit ein Verfahren zur Herstellung eines Polyolefinwachses durch Polymerisation oder Copolymerisation von Olefinen oder deren Copolymerisation mit Diolefinen bei einer Temperatur von -40 bis 100°C, bei einem Druck von 0,5 bis 120 bar, in Suspension und in Gegenwart eines Katalysators bestehend aus einem Metallocen und einem Cokatalysator, dadurch gekennzeichnet, daß das Metallocen eine Verbindung der Formel I 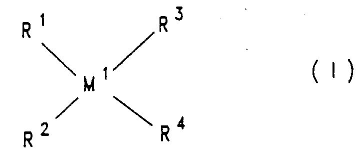 ist, worin M¹ ein Metall der Gruppe IVb, Vb oder Vlb des Periodensystems ist, R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₅-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten
R³ und R⁴ gleich oder verschieden sind und einen ein- oder mehrkernigen Kohlenwasserstoffrest bedeuten, welcher mit dem Zentralatom M¹ eine Sandwichstruktur bilden kann, und R³ und R⁴ durch eine Brücke verbunden sein können und
als Suspensionsmittel niedrigsiedende Kohlenwasserstoffe mit 3 C-Atomen oder niedrigsiedende halogenierte Kohlenwasserstoffe dienen und die Reaktionswärme durch Siedekühlung abgeführt wird.

Im erfindungsgemäßen Verfahren werden als Monomere Olefine, Diolefine und andere ungesättigte Kohlenwasserstoffe mit 2 bis 18 Kohlenstoffen verwendet. Derartige Monomere sind cyclische, multicyclische, lineare oder verzweigte ungesättigte Kohlenwasserstoffe. Beispiele hierfür sind Ethylen, Propylen, 1-Buten, 1-Penten, 1-Hexen, 1-Octen, 4-Methyl-1-penten, Styrol oder cyclischen Olefine wie Cyclopenten, Cyclohexen, Norbornen, 1,4,5,8-Dimethano-1,2,3,4,4a,5,8,8a-octahydronaphthalin (DMON) und deren strukturellen Abkömmlingen sowie Diolefine wie Norbornadien, 1,3-Butadien, 1,4-Pentadien, 1,4- oder 1,5-Hexadien, 1,7-Octadien, 1,3- oder 1,5-Cyclooctadien. Bevorzugt ist die Polymerisation von Ethylen oder Propylen sowie die Copolymerisation von Ethylen oder Propylen mit einem Olefin mit 3 bis 10 Kohlenstoffatomen, besonders bevorzugte Copolymerwachse sind Ethylen/Propylen-, Ethylen/1-Buten-, Ethylen/1-Hexen-, und Ethylen/Propylen/1-Buten-Terpolymerwachse.

Die Polymerisation erfolgt in Gegenwart eines Metallocen-Katalysatorsystems.

Geeignete hochaktive Metallocen-Katalysatorsysteme für die Herstellung von Polyolefinwachsen in Niedrigsiedern bestehen aus einem Metallocen und einem Cokatalysator.

Das Metallocen ist eine Verbindung der Formel I 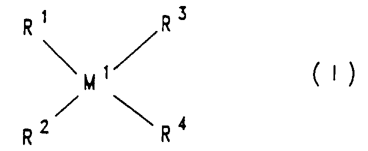 ist, worin M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten
R³ und R⁴ gleich oder verschieden sind und einen ein- oder mehrkernigen Kohlenwasserstoffrest bedeuten, welcher mit dem Zentralatom M¹ eine Sandwichstruktur bilden kann.

Die Formel I umfaßt auch Verbindungen der Formel Ia 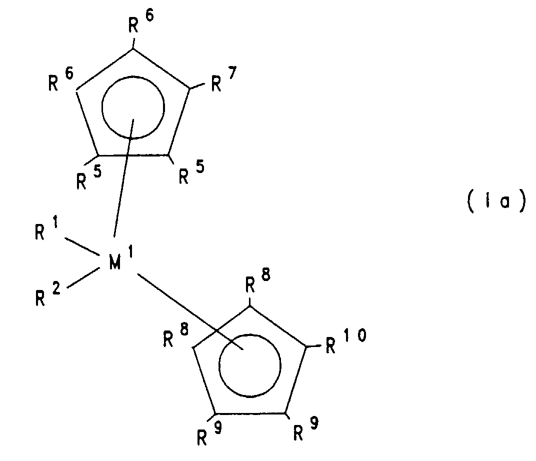 und der Formel Ib 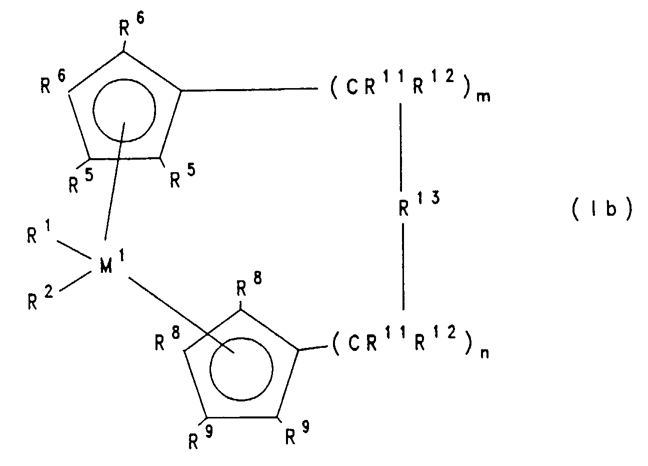 In den Formeln Ia und Ib ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Titan, Zirkon und Hafnium.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor oder Methyl.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀, vorzugsweise C₆-C₈-Arylgruppe, eine C₁-C₁₀-, vorzugsweise C₁-C₃-Alkoxygruppe, einen -NR¹⁴₂-, -SR¹⁴- -OSiR¹⁴₃-, -SiR¹⁴₃₋, oder -PR¹⁴₂ -Rest, worin R¹⁴ eine C₁-C₁₀-, vorzugsweise C₁-C₃-Alkylgruppe oder C₆-C₁₀-, vorzugsweise C₆-C₈-Arylgruppe, oder im Falle Si oder P enthaltender Reste auch ein Halogenatom, vorzugsweise Chloratom, ist, oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Indenyl, Tetrahydroindenyl, Benzoindenyl, Fluorenyl und Cyclopentadienyl.

R¹³ ist 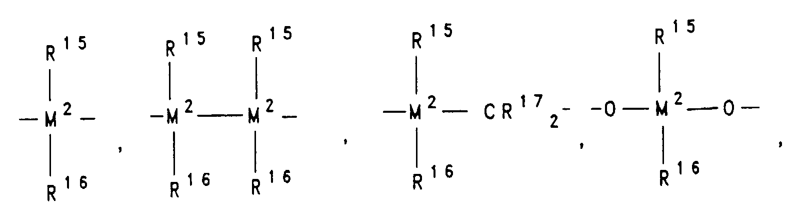 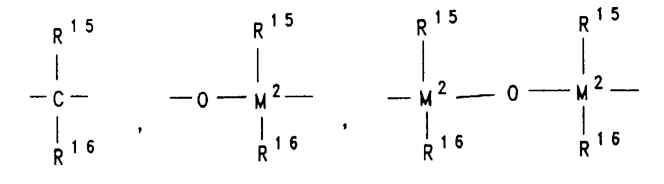 =BR¹⁵, =AlR¹⁵, -Ge-, -Sn-, -0-, -S-, =SO, =SO₂, =NR¹⁵, =CO, =PR¹⁵ oder =P(O)R¹⁵, wobei R¹⁵, R¹⁶ und R¹⁷ gleich oder verschieden sind und ein Wasserstoffatom, ein Halogenatom, eine C₁-C₃₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁵ und R¹⁶ oder R¹⁵ und R¹⁷ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁵R¹⁶, =SiR¹⁵R¹⁶, =GeR¹⁵R¹⁶, -O-, -S-, =SO, =PR¹⁵ oder =P(0)R¹⁵.

R¹¹ und R¹² sind gleich oder verschieden und haben die für R¹⁵ genannte Bedeutung. m und n sind gleich oder verschieden und bedeuten null, 1 oder 2, bevorzugt null oder 1, wobei m plus n null, 1 oder 2, bevorzugt null oder 1 ist.

Beispiele für bevorzugt geeignete Metallocene sind:
Bis(cyclopentadienyl)zirkondichlorid,
Bis(methylcyclopentadienyl)zirkondichlorid,
Bis(n-butylcyclopentadienyl)zirkondichlorid,
Bis(i-butylcyclopentadienyl)zirkondichlorid,
Bis(alkylcyclopentadienyl)zirkondichlorid,
Bis(1,2-dimethylcyclopentadienyl)zirkondichlorid,
Bis(1,3-dimethylcyclopentadienyl)zirkondichlorid,
Bis(1,2,4-trimethylcyclopentadienyl)zirkondichlorid,
Bis(1,2,3-trimethylcyclopentadienyl)zirkondichlorid,
Bis(indenyl)zirkondichlorid,
Bis(4,5,6,7-tetrahydroindenyl)zirkondichlorid,
Bis(1-methylindenyl)zirkondichlorid,
Bis(2-methylindenyl)zirkondichlorid,
Bis(4-methylindenyl)zirkondichlorid,
Bis(5-methylindenyl)zirkondichlorid,
Bis(2-methyl-4,6-di-i-propyl-indenyl)zirkondichlorid,
Bis(alkylindenyl)zirkondichlorid,
Bis(cyclopentadienyl)zirkondimethyl,
Bis(cyclopentadienyl)zirkondibenzyl,
sowie weitere bevorzugte Metallocene:
Dialkylsilylbis(indenyl)zirkondichlorid,
Alkylalkylenbis(indenyl)zirkondichlorid,
Alkylenbis(indenyl)zirkondichlorid,
Diarylalkylenbis(indenyl)zirkondichlorid,
Alkylenbis(indenyl)hafniumdichlorid,
Diarylsilylbis(indenyl)zirkondichlorid,
(Aryl)(alkyl)bis(indenyl)zirkondichlorid,
Dialkylgermylbis(indenyl)zirkondichlorid,
(Alkyl)(alkenyl)silylbis(indenyl)zirkondichlorid,
(Aryl)(alkenyl)silylbis(indenyl)zirkondichlorid,
Dimethylsilylbis(indenyl)zirkondichlorid,
Ethylenbis(indenyl)zirkondichlorid,
Diphenylsilylbis(indenyl)zirkondichlorid,
Dimethylgermylbis(indenyl)zirkondichlorid,
Bis(pentamethylcyclopentadienyl)zirkondichlorid,
Dimethylsilyl-bis(1-tetrahydroindenyl)zirkondichlorid,
Ethylen-bis(1-tetrahydroindenyl)zirkondichlorid,
Dimethylsilyl-bis-1-(2-methyltetrahydroindenyl)zirkondichlorid,
Ethylen-bis-1-(2-methyl-tetrahydroindenyl)zirkondichlorid,
Dimethylsilyl-bis-1-(2,3,5-trimethylcyclopentadienyl)zirkondichlorid,
Dimethylsilyl-bis-1-(2,4-dimethyl-cyclopentadienyl)zirkondichlorid,
Ethylen-bis(1-indenyl)zirkondichlorid,
Dimethylsilyl-bis(1-indenyl)zirkondichlorid,
Diphenylsilyl-bis(1-indenyl)zirkondichlorid,
Dimethylsilyl-bis(1-indenyl)zirkondimethyl,
Dimethylsilyl-bis-1-(2-methyl-indenyl)zirkondichlorid,
Phenylmethylsilyl-bis-1-(2-methyl-indenyl)-zirkondichlorid,
Dimethylsilyl-bis-1-(2-methyl-4-ethylindenyl)-zirkondichlorid,
Dimethylsilyl-bis-1-(2-methyl-4-i-propylindenyl)-zirkondichlorid,
Ethylen-bis-1-(4,7-dimethyl-indenyl)zirkondichlorid,
sowie außerdem verwendbare Metallocene:
Diphenylmethylen(9-fluorenyl)(cyclopentadienyl)zirkondichlorid,
Dimethylsilyl(9-fluorenyl)(cyclopentadienyl)zirkondichlorid,
Isopropyliden(9-fluorenyl)(cyclopentadienyl)zirkondichlorid,
Isopropyliden(1-indenyl)(cyclopentadienyl)zirkondichlorid.

Besonders bevorzugt verwendet werden Ethylenbis(indenyl)zirkondichlorid, Bis(indenyl)zirkondichlorid, Bis(4,5,6,7-terahydroindenyl)zirkondichlorid, Bis(cyclopentadienyl)zirkondimethyl, Bis(methylcyclopentadienyl)zirkondichlorid, Bis(n-butylcyclopentadienyl)zirkondichlorid und Bis(cyclopentadienyl)zirkondichlorid.

Prinzipiell ist als Cokatalysator jede Verbindung geeignet, die auf Grund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem Metallocenkation eingehen.

Der Cokatalysator des erfindungsgemäß zu verwendenden Katalysators ist vorzugsweise ein Aluminoxan oder eine andere aluminiumorganische Verbindung. Das Aluminoxan ist eine Verbindung der Formel IIa für den linearen und/oder Formel IIb für den cyclischen Typ

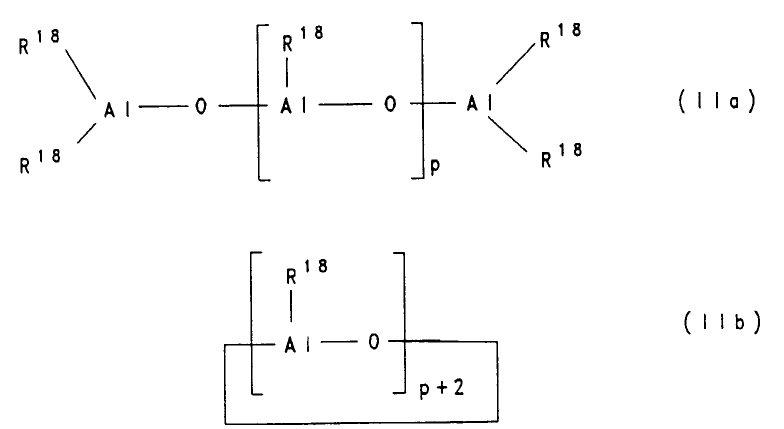

In diesen Formeln bedeutet R¹⁸ eine C₁-C₆-Alkylgruppe, vorzugsweise Methyl, Ethyl, n-Butyl oder Isobutyl, insbesondere Methyl oder Butyl, und p ist eine ganze Zahl von 4 bis 30, bevorzugt 10 bis 20, wobei die Reste R¹⁸ auch verschieden sein können. Besonders bevorzugt sind Methylaluminoxan und Methylbutylaluminoxan mit einem Verhältnis Methyl : Butyl = 100 : 1 bis 1 : 1, wobei Butyl n-Butyl oder i-Butyl oder n-Butyl/i-Butyl-Gemische bedeuten soll und die Reste eine beliebige, bevorzugt statistische Verteilung besitzen.

Eine weitere Möglichkeit ist die Verwendung von geträgerten Aluminoxanen, indem beispielsweise das Trägermaterial unter Inertbedingungen in der Lösung mindestens eines Aluminiumalkyls suspendiert und diese Suspension mit Wasser umgesetzt wird.

Die Herstellung des erfindungsgemäß zu verwendenden Katalysators kann durch Umsetzung der Übergangsmetall-Verbindung mit der aluminiumorganischen Verbindung auf verschiedene Weise geschehen:
1) Die aluminiumorganische Verbindung wird in einem geeigneten Lösemittel, wie beispielsweise Pentan, Hexan, Heptan, Toluol oder Dichlormethan mit der Übergangsmetall-Verbindung bei einer Temperatur von -20° bis + 120°C, bevorzugt bei -10° bis 40°C, durch intensives Mischen, beispielsweise durch Verrühren, zusammengebracht. Das molare Verhältnis Al : M¹ beträgt dabei 1 : 1 bis 10000 : 1, bevorzugt 10 : 1 bis 2000 : 1, und die Reaktionszeit 5 bis 120 Minuten, bevorzugt 10 bis 30 Minuten, bei einer Aluminium-Konzentration von größer 0,01 mol/dm³, bevorzugt größer 0,1 mol/dm³ unter Inertgas.
2) Ein unlösliches oder geträgertes Aluminoxan wird als Suspension mit einem Gehalt von 1 bis 40 Gew%, bevorzugt mit 5 bis 20 Gew%, in einem aliphatischen, inerten Suspensionsmittel wie n-Decan, Hexan, Heptan oder Dieselöl mit der feingemahlenen Übergangsmetall-Verbindung oder ihrer Lösung in einem inerten Lösemittel wie Toluol, Hexan, Heptan oder Dichlormethan in einem molaren Verhältnis Al : M¹ von 1 : 1 bis 10000 : 1, bevorzugt von 10 : 1 bis 2000 : 1, bei einer Temperatur von -20° bis + 120°C, bevorzugt -20° bis 40°C, während einer Reaktionszeit von 5 bis 120 Minuten, bevorzugt 10 bis 60 Minuten, unter intensivem Mischen umgesetzt.

Der so hergestellte Katalysator wird entweder als Suspension direkt zur Polymerisation eingesetzt oder durch Filtration oder Dekantieren abgetrennt und mit einem inerten Suspensionsmittel wie Toluol, n-Decan, Hexan, Heptan, Dieselöl, Dichlormethan gewaschen. Nach einer derartigen Wäsche kann er im Vakuum getrocknet und als Pulver oder noch mit Lösemittel behaftet wieder resuspendiert als Suspension in einem inerten Suspensionsmittel, wie beispielsweise Toluol, Hexan, Heptan, Dieselöl oder Dichlormethan in das Polymerisationssystem dosiert werden.

Der gemäß 1) oder 2) hergestellte Katalysator kann auch vorpolymerisiert verwendet werden oder das Metallocen kann auf einen Träger aufgebracht eingesetzt werden. Zur Vorpolymersation wird bevorzugt eines der zu polymerisierenden Olefine verwendet. Geeignete Trägermaterialien sind beispielsweise Silicagel, Aluminiumoxid, festes Aluminoxan oder andere organische oder anorganische Trägermaterialien. Geeignet ist auch ein Polyolefin-Träger.

Als Cokatalysatoren können anstelle der aluminiumorganischen Verbindungen auch Verbindungen der Formeln R¹⁹ₓNH₄₋ₓBR²⁰₄, R¹⁹ₓPH₄₋ₓBR²⁰₄, R¹⁹₃CBR²⁰₄ oder BR²⁰₃ verwendet werden. In diesen Formeln bedeutet x eine Zahl von 1 bis 4, die Reste R¹⁹ sind gleich oder verschieden, bevorzugt gleich, und bedeuten C₁-C₁₀-Alkyl oder C₆-C₁₈-Aryl oder zwei Reste R¹⁹ bilden zusammen mit dem sie verbindenden Atom einen Ring, und die Reste R²⁰ sind gleich oder verschieden, bevorzugt gleich, und stehen für C₆-C₁₈-Aryl, das durch Alkyl, Haloalkyl oder Fluor substituiert sein kann. Insbesondere steht R¹⁹ für Ethyl, Propyl, Butyl oder Phenyl und R²⁰ für Phenyl, Pentafluorphenyl, 3,5-Bis-trifluormethylphenyl, Mesityl, Xylyl oder Tolyl.

Diese Cokatalysatoren sind insbesondere geeignet in Kombination mit Metallocenen der Formel I, wenn R¹ und R² eine C₁-C₁₀-Alkylgruppe oder eine Aryl- oder Benzylgruppe, vorzugsweise Methylgruppe, bedeuten. Die Derivatisierung zu den Metallocenen der Formel I kann nach literaturbekannten Methoden, beispielsweise durch Umsetzung mit Alkylierungsmitteln wie Methyllithium erfolgen (vgl. Organometallics **9** (1990) 1539; J. Am. Chem. Soc. **95** (1973) 6263).

Bei Verwendung der vorgenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösemittels, wie beispielsweise Toluol, hergestellt.

Dabei wird die Übergangsmetallkomponente in einer Konzentration, bezogen auf das Übergangsmetall, von 10⁻³ bis 10⁻⁷, vorzugsweise 10⁻⁴ bis 10⁻⁶ mol M¹ pro dm³ Lösemittel angewendet. Der Cokatalysator wird in einer Konzentration von 10⁻⁵ bis 10⁻¹ mol, bevorzugt 10⁻⁴ bis 10⁻² mol pro dm³ Lösemittel verwendet, bezogen auf den Gehalt an Aluminium. Prinzipiell sind aber auch höhere Konzentrationen möglich.

Die Polymerisation wird als Suspensionspolymerisation unter Siedekühlung durchgeführt.

Geeignete Suspensionsmittel sind niedrigsiedende Kohlenwasserstoffe wie beispielsweise Propan oder niedrigsiedende halogenierte Kohlenwasserstoffe, wie beispielsweise Methylenchlorid sowie deren Gemische untereinander oder mit anderen Suspensionsmitteln, wie Hexan, Heptan, Octan, Dieselölen, Toluol oder mit Olefinen, wie oben beschrieben. Außerdem können flüssige Olefine bis 40 Gew.-% Bestandteil des Suspensionsmittels sein. Bevorzugte Hauptkomponente des Suspensionsmittels ist Propan.

Die Polymerisation wird bei einer Temperatur von 40 - 95°C, bei einem Olefin-Partialdruck von 0,5 bis 30 bar, bei einem Wasserstoff-Partialdruck von 0 bis 10 bar, unter Zugabe (bezogen auf Al) von 0,01 bis 10 mmol Cokatalysator/dm³ Suspensionsmittel und einem Katalysator/Cokatalysator-Verhältnis von 1:1 bis 1:1000 durchgeführt.

Der Gesamtdruck des Systems beträgt maximal 150% des Dampfdrucks des Suspensionsmittels bei.der Polymerisationstemperatur. Bevorzugt wird die Verwendung von Propan als Suspensionsmittel bei 60 - 80°C und einem Gesamtdruck von 23 bis 48 bar, besonders bevorzugt bei 70° und 26 bis 39 bar.

Zur Molmassenreglung wird zusätzlich Wasserstoff zugegeben oder die Polymerisationstemperatur verändert, wobei durch periodische Änderungen oder einen mehrstufigen Prozess in definierter Weise auch Polymere mit breiter Molmassenverteilung zugänglich sind.

Zur Polymerisation kann vor der Zugabe des Katalysators zusätzlich eine andere Aluminiumalkylverbindung wie z.B. Trimethylaluminium, Triethylaluminium, Triisobutylaluminium oder Isoprenylaluminium zur Inertisierung des Polymerisations systems in einer Konzentration von 1 bis 0,001 mmol Al pro kg Reaktorinhalt zugegeben werden.

Darüber hinaus wird die in dem erfindungsgemäßen Verfahren erzielte Polymermolmasse durch die Art des verwendeten Metallocens, durch das Al/Zr-Verhältnis des Katalysator-Systems und durch die Zugabe sowie Art weiterer Aluminiumalkyle bestimmt.

Die Polymerisation wird diskontinuierlich oder kontinuierlich, ein- oder mehrstufig durchgeführt, wobei durch den nur geringen zeitabhängigen Abfall der Polymerisationsaktivität beliebige Verweilzeiten realisiert werden können.

Für das Suspensionsverfahren mit Siedekühlung ist außerdem die mit Metallocen-Katalysatorsystemen erreichbare enge Verteilung der Molmasse vorteilhaft, da hierdurch ein verminderter Anteil von flüchtigen Oligomeren erreicht wird, welche sich bei längerer Betriebsdauer in den Kühlern anreichern können.

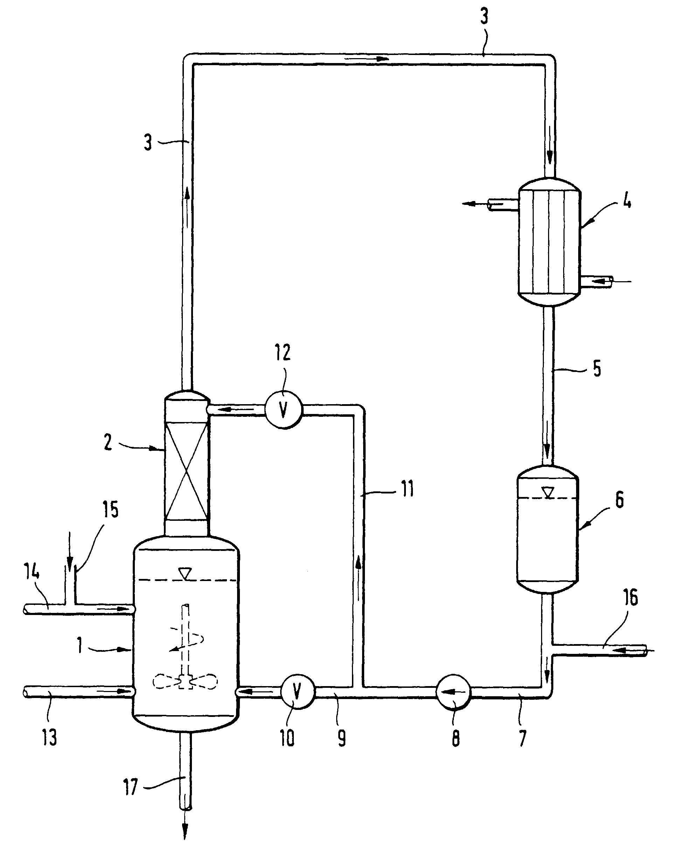

Die Polymerisation wird in einer Apparatur durchgeführt, wie sie in der Figur skizziert ist.

In der Figur bedeuten
- 1: Reaktor (gegebenenfalls mit Rührer)
- 2: Trennsäule / Dom
- 3: Rohrleitung
- 4: Kühler
- 5: Rohrleitung
- 6: Ausgleichsgefäß
- 7: Rohrleitung
- 8: Pumpe
- 9: Rohrleitung
- 10: Ventil
- 11: Rohrleitung
- 12: Ventil
- 13: Zuleitung für Monomere und Wasserstoff
- 14: Zuleitung für Suspensionsmittel
- 15: Zuleitung für Katalysator und Cokatalysator
- 16: Zuleitung für Aluminiumalkyl oder zusätzlichen Cokatalysator
- 17: Austragsleitung

Der Polymerisations-Reaktor (1) ist mit einer Trennsäule (Dom) (2) ausgerüstet. Von dieser Trennsäule führt eine Rohrleitung (3) zu einem Kühler (4), der allerdings auch direkt mit der Trennsäule (2) verbunden sein kann. Eine Rohrleitung (5) führt zu einem Ausgleichsgefäß (6), welches über eine Rohrleitung (7), eine Pumpe (8) und einer Rohrleitung (9) mit dem Reaktor (1) verbunden ist. Hinter der Pumpe (8) führt eine Rohrleitung (11) zur Trennsäule / Dom (2). Die Rohrleitung (9) kann durch ein Ventil (10) und die Rohrleitung (11) durch ein Ventil (12) abgesperrt werden. In den Reaktor (1) führen noch die Zuleitungen (13) und (14), wobei Rohr (14) zusätzlich mit einer Zuleitung (15) verbunden ist. Durch die Austragsleitung (17) kann der Reaktor (1) entleert werden. An die Rohrleitung (7) ist noch eine Zuleitung (16) angeschlossen.

Das im Reaktor (1) befindliche Suspensionsmittel gerät durch die Polymerisationswärme ins Sieden und strömt durch die Rohrleitung (3) in den Kühler (4), wo es kondensiert wird. In der Trennsäule (2) werden niedermolekulare Produkte zurückgehalten. Das kondensierte Suspensionsmittel wird durch die Rohrleitung (5) dem Ausgleichsgefäß (6) zugeführt, von wo es durch die Rohrleitung (7) entnommen und mittels der Pumpe (8) durch die Rohrleitung (9) und das Ventil (10) in den Reaktor (1) zurückgeführt wird. Durch die Rohrleitung (16) wird zusätzlicher Aktivator (Aluminiumalkyl oder Cokatalysator) in den Strom des Suspensionsmittels eingespeist. Bei der Herstellung niedermolekularer Produkte kann ein Teil des Suspensionsmittels durch die Leitung (11) und das Ventil (12) in die Trennsäule (2) geführt werden, um dort die Rückführung mitgerissener Produkte in den Reaktor (1) zu unterstützen. Monomere und Wasserstoff werden durch die Zuleitung (13) in den Reaktor (1) eingespeist, frisches Suspensionsmittel durch die Zuleitung (14). Die Mischung aus Katalysator und Cokatalysator wird durch die Zuleitung (15) in den Strom des Suspensionsmittels eingegeben. Durch die Austragsleitung (17) wird das gebildete Polymerwachs dem Reaktor (1) entnommen.

Zur Erhöhung der Ausbeute oder für ein zweistufiges Verfahren kann hinter dem Suspensions-Austrag (17) ein zweiter Nach-Reaktor angeordnet werden.

Zur Erhöhung des Feststoff-Anteils beim Suspensions-Austrag kann dieser an einem Sedimentations-Teil im Reaktor-Boden angebracht werden. Hierdurch wird der Anteil der im Suspensionsmittel gelösten Monomere und die Betriebskosten zur Rückführung des Suspensionsmittels sowie der Aufrechterhaltung des Cokatalysator-Pegels im Reaktor erniedrigt.

Der Katalysator kann als Lösung oder in geträgerter Form als Suspension dosiert werden. Zur Voraktivierung wird ein Teil des Cokatalysators (30 bis 80 mol%, bezogen auf Al) mindestens 10 min vor der Dosierung in den Reaktor mit dem Katalysator vermischt oder ist bereits Bestandteil des geträgerten Katalysators. Die so hergestellte Lösung des Katalysators kann entweder direkt in den Reaktor oder vorzugsweise verdünnt über die Zuführung (14) des Suspensionsmittels eindosiert werden.

Zur Regelung des Cokatalysator-Pegels kann dieser außerdem getrennt sowie zusammen mit weiteren Aluminiumalkylen in den Reaktor oder in die Kondensat-Rückführung (7) dosiert werden.

Als Lösungs- oder Suspensionsmittel für Katalysator oder Cokatalysator sind allgemein Kohlenwasserstoffe wie Toluol, Heptan, Hexan, Pentan, Butan oder Propan sowie technische Dieselöle geeignet.

Auf ein Rühren des Reaktorinhalts kann im allgemeinen verzichtet werden, da das siedende Suspensionsmittel eine gute Umwälzung bewirkt.

Zur Weiterverarbeitung der Suspension von Wachs und Niedrigsieder können nach dem Entspannen übliche Verfahren der Wachsaufarbeitung angewendet werden.

Das erfindungsgemäß hergestellte Polyolefinwachs wird vom Suspensionsmittel abgetrennt und getrocknet.

Erfindungsgemäß hergestellte Polyethylenwachse bestehen zu 100 bis 80 Gew.-%, bezogen auf das Gesamtpolymer, aus Ethyleneinheiten und zu 0 bis 20 Gew.-%, bezogen auf das Gesamtpolymer, aus Einheiten, die sich von einem anderen Olefin, Diolefin oder anderem ungesättigten Kohlenwasserstoff, insbesondere Propylen, 1-Buten, 2-Buten, 4-Methyl-1-penten oder 1-Hexen ableiten. Sie besitzen eine mittlere Molmasse M_{w} von ca. 500 bis ca. 50000, vorzugsweise ca. 1000 bis ca. 30000. Die Molmassenverteilung (Polydispersität) M_{w}/Mₙ ist außerordentlich eng und beträgt ca. 1 bis 5, vorzugsweise 1 bis 3. Der Schmelzbereich des Wachses ist von ca. 126 bis 132°C für ein Homopolymerisat durch Copolymerisation beliebig hinunter bis ca. 80 bis 90°C einstellbar.

Erfindungsgemäß hergestellte Polypropylenwachse bestehen zu 80 bis 100, vorzugsweise 90 bis 100 Gew.-%, bezogen auf das Gesamtpolymer, aus Propyleneinheiten und zu 0 bis 20, vorzugsweise 0 bis 10 Gew.-%, bezogen auf das Gesamtpolymer, aus Einheiten, die sich von Ethylen oder einem der anderen oben beschriebenen Olefine ableiten. Sie besitzen eine mittlere Molmasse M_{w} von 1000 bis 50000 g/mol, bevorzugt 8000 bis 45000 g/mol, eine Polydispersität M_{w}/Mₙ von 1 bis 5, bevorzugt 1 bis 3, einen Schmelzpunkt von 50 bis 160°C, bevorzugt 90 bis 160°C, Schmelzviskosität von 100 bis 80000 mPa.s, bevorzugt 120 bis 50000 mPa.s bei 170°C und eine statistische Verteilung der Comonomereinheiten in der Polymerkette.

Die Siedekühlung erfordert einen möglichst hohen Anteil an kondensierbaren Gasen im Dampfraum und ist daher erst bei Katalysatorsystemen sinnvoll, die auch bei niedrigem Ethylendruck mit sehr hohen Umsätzen polymerisieren. Von weiterem Vorteil zur Durchführung der Siedekühlung ist der geringe Wasserstoff-Partialdruck, welcher durch die gute Wasserstoff-Ansprechbarkeit der Metallocen-Katalysatoren zum Erreichen der wachstypischen Polymermolmassen erforderlich ist.

Als weiterer Vorteil der Siedekühlung ist die Vermeidung einer Verminderung der Kühlkapazität des Polymerisations-Reaktors durch den Aufbau von Wand-Belägen. Außerdem bedingt der Wegfall der Wandkühlung eine verminderte Belagsbildung.
Die Kombination der Siedekühlung mit einer Rückspülung gibt die Möglichkeit, den Reaktoroberteil kontinuierlich oder diskontinuierlich von Produktteilen zu befreien, wodurch Stillstände zum Reinigen der Rohrleitungen und Kühler von mitgerissenen Partikeln vermieden werden können. Die Einführung der Rückspülung ermöglicht somit einen kontinuierlichen Betrieb.

Ein weiterer Vorteil dieses Polymerisations-Verfahrens ist die hohe Raum-Zeit-Ausbeute die unabhängig von Größe des Polymerisationssystems durch die effiziente Siedekühlung realisierbar ist.

Die nachfolgenden Beispiele sollen die Erfindung näher erläutern.
Es bedeuten
- VZ =: Viskositätszahl in cm³/g
- M_{w} =: Molmassengewichtsmittel ermittelt durch 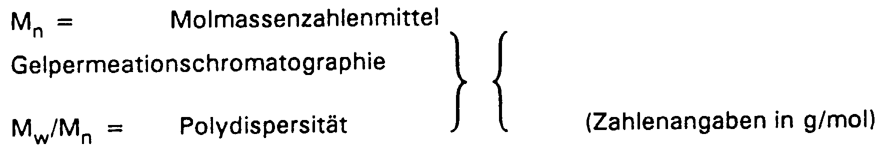
- SV =: Schmelzviskosität, ermittelt mittels Rotationsviskosimeter bei 140°C
- SD =: Schüttdichte des Polymerpulvers in g/dm³
Schmelzpunkte, Kristallisationspunkte, deren Halbwertsbreiten, die Schmelz- und Kristallisationsenthalpien sowie die Glastemperaturen (T_{g}) wurden durch DSC-Messungen (10°C/min Aufheiz-/Abkühlgeschwindigkeit) bestimmt.

### Beispiele

Alle Glasgeräte wurden im Vakuum ausgeheizt und mit Argon oder Stickstoff gespült. Alle Operationen wurden unter Ausschluß von Feuchtigkeit und Sauerstoff in Schlenk-Gefäßen durchgeführt. Die verwendeten Lösemittel wurden unter Argon jeweils frisch über Na/K-Legierung destilliert und in Schlenk-Gefäßen aufbewahrt.

Die angegebenen Polymerschmelzpunkte sind einer DSC-Messung für 2. Aufschmelzen (10°C/min) entnommen. Der Isotaktische Index wurde aus FT-IR-Spektren ohne vorherige Extraktion der Probe über das Intensitätsverhältnis der Banden bei 998 cm⁻¹ und 972 cm⁻¹ gemäß Dechant, "IR-spektroskopische Untersuchungen von Polymeren", Akademie Vlg., Berlin 1972, bestimmt.

Methylaluminoxan wurde als 10%ige Toluol- Lösung im Handel bezogen und enthielt gemäß Aluminium-Bestimmung 36 mg Al/cm³. Der mittlere Oligomerisationsgrad gemäß Gefrierpunktserniedrigung in Benzol betrug n = 20.

Die Aluminium-Bestimmung erfolgte nach Hydrolyse durch Wasser und Schwefelsäure durch komplexometrische Titration nach Schwarzenbach.

Die Polymerisationen erfolgten in einer Apparatur ähnlich der in der Figur gezeigten.

### Beispiel 1

In eine mit Stickstoff gespülte Anlage gemäß der Figur mit einem 100 dm³ Kessel wurden 30 kg Propan sowie 2,70 kg Propylen und 100 cm³ toluolische Methylaluminoxan-Lösung eingefüllt. Unter Rühren mit 170 Upm wurden 0,5 bar Wasserstoff und 4 bar Ethylen zugeführt.

Parallel hierzu wurden 35 mg Bis(indenyl)-zirkondichlorid in 100 cm³ toluolischer Methylaluminoxan-Lösung gelöst und 15 min gerührt.

Der Rührer im Reaktor wurde abgeschaltet und die Polymerisation durch Zupumpen der Katalysatorlösung über 10 min gestartet. Die Innentemperatur des Reaktors stieg schnell an und wurde durch Nachspeisen von Ethylen auf 70°C geregelt. Die relative Konzentration der Gase im Dampfraum des Reaktors wurde mit Hilfe eines Gaschromatographen (GC) überwacht. Wasserstoff und Propylen wurden gemäß GC auf ein konstantes Verhältnis zum Ethylen nachdosiert. Dabei wurde im Gleichgewicht ein Gesamtdruck von 30 bar erreicht. Die Ventile (10) und (12) wurden so eingestellt, daß die Pumpe (8) 10 Vol.-% des Kreisstroms über Leitung (11) in den Dom (2) des Reaktors (1) förderte. Nach einer Polymerisationszeit von 1 h wurde die Propan-Wachs-Suspension in ein Aufbereitungsgefäß abgelassen und der Katalysator durch Zugabe von Isopropanol desaktiviert. Nach dem Abdestillieren des Propans und der Vakuumtrocknung des Produktes wurden nach dem Öffnen des Aufbereitungsgefäßes 11,2 kg Copolymerwachs mit einer VZ von 22 cm³/g, einem Schmelzpunkt (DSC) von 112°C und einer DSC-Schmelzenthalpie von 138 J/g erhalten. Die Viskosität der Schmelze bei 140°C betrug 1200 mPa.s. Der Propylengehalt betrug 4,4 mol-% nach ¹³C-NMR.

Der Versuch wurde viermal wiederholt. Die Ausbeute blieb im Rahmen von 5 Gew.-% konstant. Nach dem Öffnen des Reaktors wurden, abgesehen von feinteiligen Produktresten am Boden, keine Wandbeläge festgestellt.

### Vergleichsbeispiel A

Das Beispiel 1 wurde wiederholt, wobei der Doppelmantel des Reaktors an ein Temperierungssystem angeschlossen und Leitung (3) sowie Ventile (10) und (12) geschlossen wurden. Die Polymerisation wurde dann bei 30°C durch Zugabe des Katalysators und anschließend unter Kühlung auf 70°C Reaktorinnentemperatur fortgeführt. Ethylen wurde bis zu einen Gesamtdruck von 30 bar kontinuierlich nachdosiert und Propylen und Wasserstoff entsprechend den Ergebnissen der GC-Messung zugegeben.

Nach 1 h resultierten 10,5 kg Copolymerwachs mit einer VZ von 19 cm³/g und einer Schmelzviskosität bei 140°C von 800 mPa.s.

Das Versuch wurde viermal wiederholt. Dabei stieg der Unterschied zwischen Manteltemperatur und Reaktorinnentemperatur mit fortschreitender Betriebsdauer an. Nach dem Öffnen des Reaktors wurde ein geschlossener Wachsbelag mit einer Dicke von ca. 0,5 mm an der Reaktorinnenwand festgestellt.

### Vergleichsbeispiel B

Das Beispiel 1 wurde wiederholt, wobei während des Betriebes das Ventil (12) geschlossen blieb.

Nach dem Öffnen des Aufarbeitungsgefäßes wurden 11,6 kg Copolymerwachs mit einer VZ von 20 cm³/g und einer Schmelzviskosität bei 140°C von 910 mPa.s erhalten. Der Versuch wurde viermal wiederholt. Nach dem Öffnen des Reaktors wurden wie in Beispiel 1 keine Wandbeläge festgestellt. Im Reaktor-Dom (2) und teilweise in der Leitung (3) wurden lockere Ablagerungen eines feinen Materials gefunden. Die VZ von 18 cm³/g zeigte, daß die Ablagerungen hauptsächlich aus mitgerissenem Produkt und nur zu einem geringen Anteil aus Oligomeren bestanden.

## Patentansprüche

1. Verfahren zur Herstellung eines Polyolefinwachses durch Polymerisation oder Copolymerisation von Olefinen oder deren Copolymerisation mit Diolefinen bei einer Temperatur von -40 bis 95°C, bei einem Druck von 0,5 bis 120 bar, in Suspension und in Gegenwart eines Katalysators bestehend aus einem Metallocen und einem Cokatalysator, wobei das Metallocen eine Verbindung der Formel I 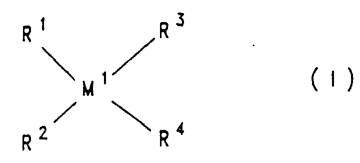 ist, worin M¹ ein Metall der Gruppe IVb, Vb oder Vlb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten
R³ und R⁴ gleich oder verschieden sind und einen ein- oder mehrkernigen Kohlenwasserstoffrest bedeuten, welcher mit dem Zentralatom M¹ eine Sandwichstruktur bilden kann und R³ und R⁴ durch eine Brücke verbunden sein können und
als Suspensionsmittel niedrigsiedende Kohlenwasserstoffe mit 3 C-Atomen oder niedrigsiedende halogenierte Kohlenwasserstoffe dienen und die Reaktionswärme durch Siedekühlung abgeführt wird.

2. Verfahren nach Anspruch 1, wobei das Metallocen eine Verbindung der Formel la 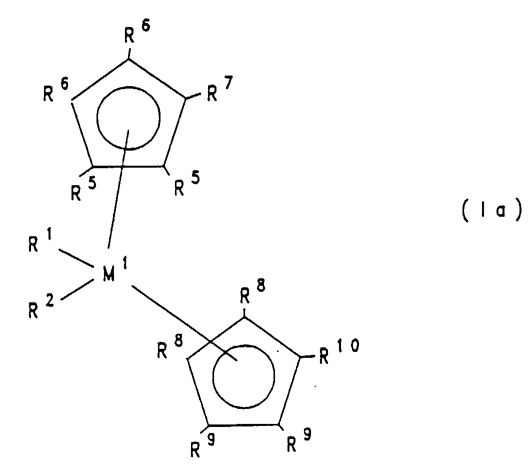 ist, worin R¹ und R² die in Anspruch 1 genannte Bedeutung haben und R⁵, R⁶, R⁷, R⁸, R⁹ und R¹⁰ gleich oder verschieden sind und ein Wasserstoffatom, ein Halogenatom, eine C₁-C₁₀-Alkylgruppe, eine C₆-C₁₀-Arylgruppe, eine C₁-C₁₀-Alkoxygruppe oder einen -NR¹⁴₂-, -SR¹⁴-, -OSiR¹⁴₃-, -SiR¹⁴₃₋, oder -PR¹⁴₂ -Rest bedeuten, worin R¹⁴ eine C₁-C₁₀-Alkylgruppe oder C₆-C₁₀-Arylgruppe, oder im Falle Si oder P enthaltender Reste auch ein Halogenatom ist, oder je zwei benachbarte Reste R⁵, R⁶, R⁷, R⁸, R⁹ oder R¹⁰ mit den sie verbindenden C-Atomen einen Ring bilden.

3. Verfahren nach Anspruch 1, wobei das Metallocen eine Verbindung der Formel Ib 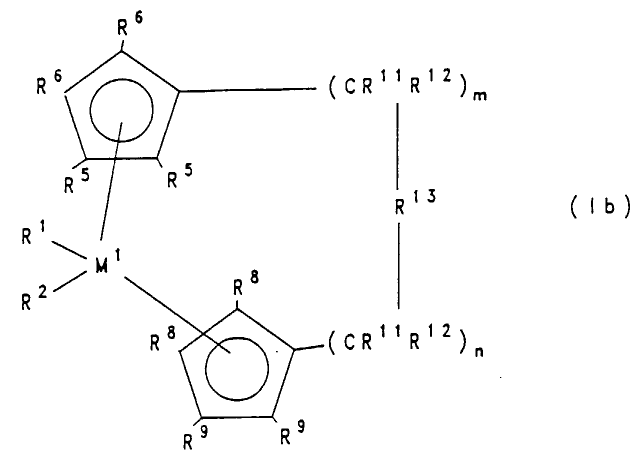 ist, worin R¹ und R² die in Anspruch 1 genannte Bedeutung haben, R⁵, R⁶, R⁸, R⁹ und R¹⁴ die in Anspruch 2 genannte Bedeutung haben, R¹³ 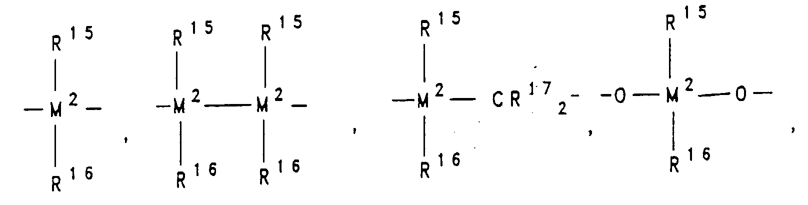 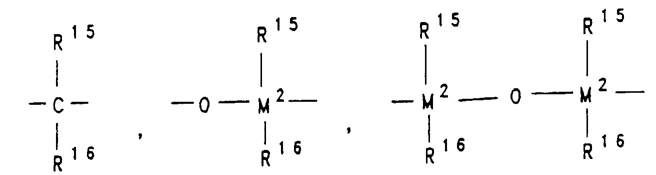 =BR¹⁵, =AlR¹⁵, -Ge-, -Sn-, -O-, -S-, =SO, =SO₂, =NR¹⁵, =CO, =PR¹⁵ oder =P(O)R¹⁵
wobei R¹⁵, R¹⁶ und R¹⁷ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine
C₈-C₄₀-Arylalkenylgruppe oder eine C₇-C₄₀-Alkylarylgruppe bedeuten, oder R¹⁵ und R¹⁶ oder R¹⁵ und R¹⁷ jeweils zusammen mit den sie verbindenden Atomen einen Ring bilden,
M² Silizium, Germanium oder Zinn sind, und
R¹¹ und R¹² gleich oder verschieden sind und die für R¹⁵ genannte Bedeutung haben, m und n gleich oder verschieden und null, 1 oder 2 bedeuten, wobei m plus n null, 1 oder 2, bevorzugt null oder 1 ist.

4. Verfahren nach einem oder mehreren der Ansprüche 1 bis 3, wobei der Cokatalysator ein Aluminoxan der Formel lla für den linearen und/oder Formel llb für den cyclischen Typ 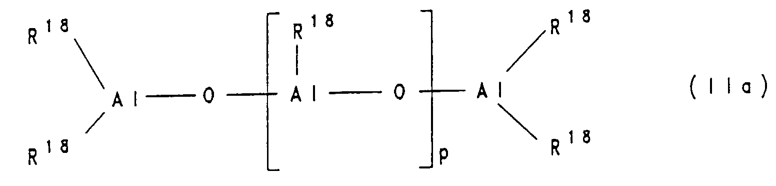 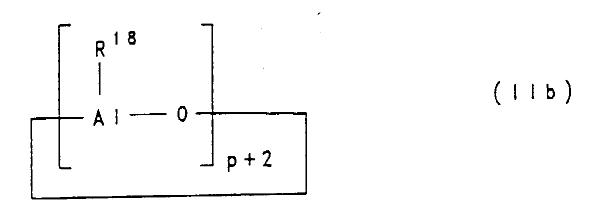 ist, worin R¹⁸ eine C₁-C₆-Alkylgruppe bedeutet und p eine ganze Zahl von 4 bis 20 ist.

5. Verfahren nach einem oder mehreren der Ansprüche 1 bis 4, wobei das Suspensionsmittel Propan ist.

6. Verfahren nach einem oder mehreren der Ansprüche 1 bis 5, wobei man einen Katalysator einsetzt, welcher sich auf einem Trägermaterial befindet.

7. Verfahren nach einem oder mehreren der Ansprüche 1 bis 6, wobei Ethylen, Propylen, 1-Buten, 4-Methyl-1-penten oder 1-Hexen polymerisiert werden.

8. Verfahren nach einem oder mehreren der Ansprüche 1 bis 7, wobei die Siedekühlung in Verbindung mit einer Rückspülung betrieben wird.

## Claims

1. A process for the preparation of a polyolefin wax by polymerization or copolymerization of olefins or copolymerization thereof with diolefins at a temperature of -40 to 95°C, at a pressure of 0.5 to 120 bar, in suspension and in the presence of a catalyst comprising a metallocene and a cocatalyst, wherein the metallocene is a compound of the formula I 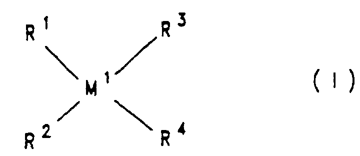
in which M¹ is a metal of group IVb, Vb or VIb of the Periodic Table of Elements,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a mononuclear or polynuclear hydrocarbon radical which may form a sandwich structure with the central atom M¹ and R³ and R⁴ may be linked by a bridge and
low-boiling hydrocarbons having 3 carbon atoms or low-boiling halogenated hydrocarbons are used as suspending agents and the heat of reaction is removed by evaporative cooling.

2. The process as claimed in claim 1, wherein the metallocene is a compound of the formula Ia 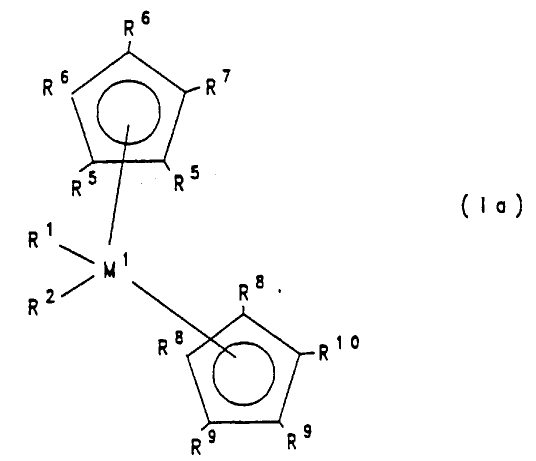 in which R¹ and R² have the meaning stated in claim 1 and
R⁵, R⁶, R⁷, R⁸, R⁹ and R¹⁰ are identical or different and are a hydrogen atom, a halogen atom, a C₁-C₁₀-alkyl group, a C₆-C₁₀-aryl group, a C₁-C₁₀-alkoxy group or an -NR¹⁴₂, -SR¹⁴, -OSiR¹⁴₃, -SiR¹⁴₃ or -PR¹⁴₂ radical in which R¹⁴ is a C₁-C₁₀-alkyl group or C₆-C₁₀-aryl group or, in the case of Si- or P-containing radicals, also a halogen atom, or two adjacent radicals R⁵, R⁶, R⁷, R⁸, R⁹ or R¹⁰ each form a ring with the carbon atoms linking them.

3. The process as claimed in claim 1, wherein the metallocene is a compound of the formula Ib 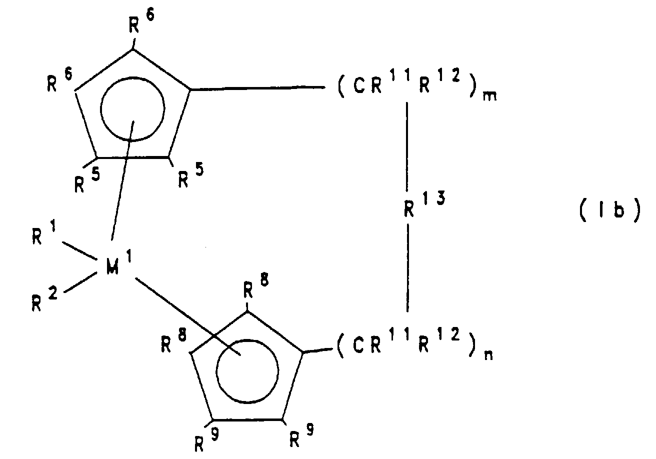 in which R¹ and R² have the meaning stated in claim 1,
R⁵, R⁶, R⁸, R⁹ and R¹⁴ have the meaning stated in claim 2,
R¹³ is 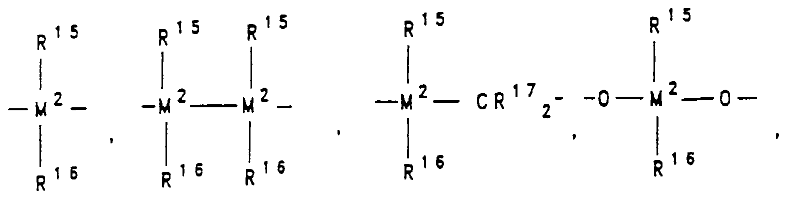 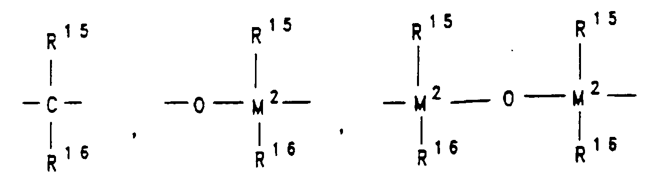 =BR¹⁵, =AlR¹⁵, -Ge-, -Sn-, -O-, -S-, =SO, =SO₂, =NR¹⁵, =CO, =PR¹⁵ or =P(O)R¹⁵
in which R¹⁵, R¹⁶ and R¹⁷ are identical or different and are a hydrogen atom, a halogen atom, a C₁-C₃₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁵ and R¹⁶ or R¹⁵ and R¹⁷, together with the atoms linking them, each form a ring,
M² is silicon, germanium or tin and
R¹¹ and R¹² are identical or different and have the meaning stated for R¹⁵, m and n are identical or different and are zero, 1 or 2, m plus n being zero, 1 or 2, preferably zero or 1.

4. The process as claimed in one or more of claims 1 to 3, wherein the cocatalyst is an aluminoxane of the formula IIa for the linear type and/or of the formula IIb for the cyclic type 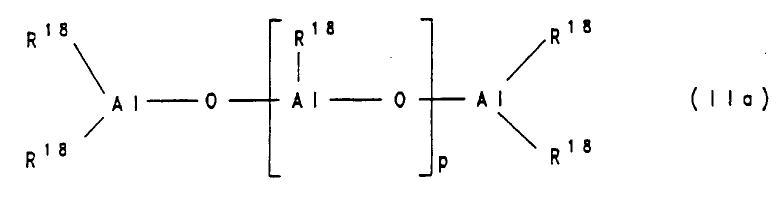 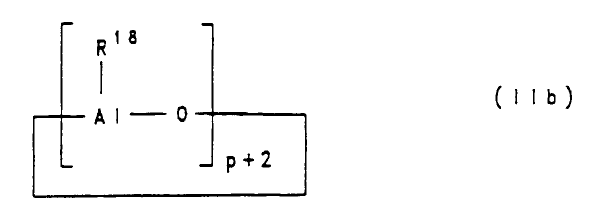 in which R¹⁸ is a C₁-C₆-alkyl group and p is an integer from 4 to 20.

5. The process as claimed in one or more of claims 1 to 4, wherein the suspending agent is propane.

6. The process as claimed in one or more of claims 1 to 5, wherein a catalyst which is present on a carrier is used.

7. The process as claimed in one or more of claims 1 to 6, wherein ethylene, propylene, 1-butene, 4-methyl-1-pentene or 1-hexene is polymerized.

8. The process as claimed in one or more of claims 1 to 7, wherein the evaporative cooling is operated in combination with back-washing.

## Revendications

1. Procédé de préparation d'une cire de polyoléfine par polymérisation ou copolymérisation d'oléfines ou leur copolymérisation avec des dioléfines à une température de -40 à 95°C, sous une pression de 0,5 à 120 bars, en suspension et en présence d'un catalyseur constitué d'un métallocène et d'un cocatalyseur, dans lequel le métallocène est un composé de formule I 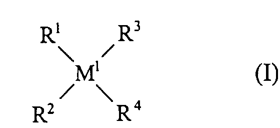 dans laquelle
M¹ représente un métal du groupe IVb, Vb ou VIb du système périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un reste hydrocarboné mono- ou polycyclique pouvant former avec l'atome central M¹ une structure en sandwich, et R³ et R⁴ peuvent être reliés par un pont, et
on utilise comme agents de suspension des hydrocarbures de 3 atomes de carbone à bas point d'ébullition ou des hydrocarbures halogénés à bas point d'ébullition et on élimine la chaleur de réaction par refroidissement par vaporisation.

2. Procédé selon la revendication 1, dans lequel le métallocène est un composé de formule la 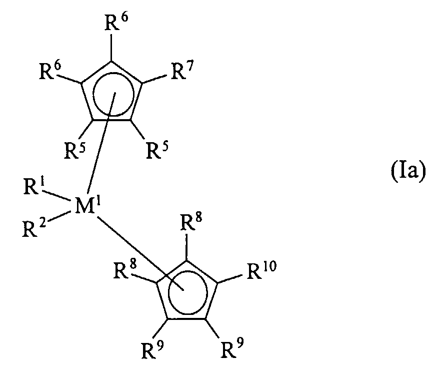 dans laquelle R¹ et R² ont la signification indiquée dans la revendication 1, et R⁵, R⁶, R⁷, R⁸, R⁹ et R¹⁰ sont identiques ou différents et représentent un atome d'hydrogène, un atome d'halogène, un groupe alkyle en C₁-C₁₀, un groupe aryle en C₆-C₁₀, un groupe alcoxy en C₁-C₁₀, ou un reste -NR¹⁴₂, -SR¹⁴, -OSiR¹⁴₃, -SiR¹⁴₃ ou -PR¹⁴₂, où R¹⁴ représente un groupe alkyle en C₁-C₁₀, ou un groupe aryle en C₆-C₁₀, ou, dans le cas de restes contenant Si ou P, R¹⁴ peut aussi être un atome d'halogène, ou bien deux restes R⁵, R⁶, R⁷, R⁸, R⁹ ou R¹⁰ voisins forment un cycle avec les atomes de carbone auxquels ils sont liés.

3. Procédé selon la revendication 1, dans lequel le métallocène est un composé de formule Ib 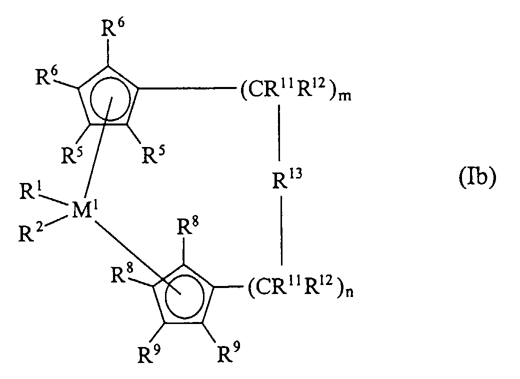 dans laquelle R¹ et R² ont la signification indiquée dans la revendication 1, R⁵, R⁶, R⁸, R⁹ et R¹⁴ ont la signification indiquée dans la revendication 2,
R¹³ est 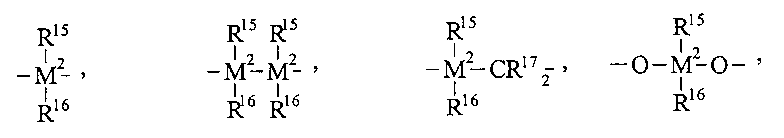 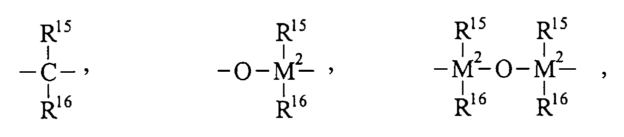 =BR¹⁵, =AlR¹⁵, -Ge-, -Sn-, -O-, -S-, =SO, =SO₂, =NR¹⁵, =CO, =PR¹⁵ ou =P(O)R¹⁵, où
R¹⁵, R¹⁶ et R¹⁷ sont identiques ou différents et représentent un atome d'hydrogène, un atome d'halogène, un groupe alkyle en C₁-C₃₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, ou un groupe alkylaryle en C₇-C₄₀, ou bien R¹⁵ et R¹⁶ ou R¹⁵ et R¹⁷ forment ensemble un cycle avec les atomes qui les relient,
M² est le silicium, le germanium ou l'étain,
R¹¹ et R¹² sont identiques ou différents et ont la signification donnée pour R¹⁵,
m et n sont identiques ou différents et sont égaux à 0, 1 ou 2, m + n étant égal à 0, 1 ou 2, de préférence à 0 ou 1.

4. Procédé selon l'une ou plusieurs des revendications 1 à 3, dans lequel le cocatalyseur est un aluminoxane de formule IIa lorsqu'il est de type linéaire et/ou de formule IIb lorsqu'il est de type cyclique: 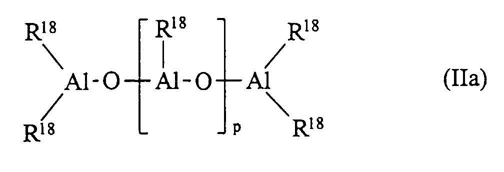 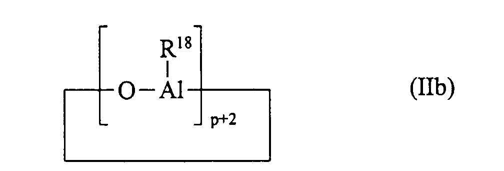 où R¹⁸ représente un groupe alkyle en C₁-C₆ et p est un nombre entier de 4 à 20.

5. Procédé selon l'une ou plusieurs des revendications 1 à 4, dans lequel l'agent de suspension est le propane.

6. Procédé selon l'une ou plusieurs des revendications 1 à 5, dans lequel on utilise un catalyseur qui se trouve sur un support.

7. Procédé selon l'une ou plusieurs des revendications 1 à 6, dans lequel on polymérise de l'éthylène, du propylène, du 1-butène, du 4-méthyl-1-pentène ou du 1-hexène.

8. Procédé selon l'une ou plusieurs des revendications 1 à 7, dans lequel on effectue le refroidissement par vaporisation en liaison avec un lavage à contre-courant.
